# EUROPEAN PATENT APPLICATION

(11) **EP 2 296 106 A1**
(43) Date of publication of application: **16.03.2011**
(21) Application number: 09011257.4
(22) Date of filing: 02.09.2009
(51) Int. Cl.: G06K 9/62

(54) **A method of training and/or evaluating a vehicle safety algorithm**

(71) Applicant: Autoliv Development AB, 44783 Vårgårda (SE)
(72) Inventor: Roll, Jacob, 58216 Linköping (SE); Tjärnström, Fredrik, 58245 Linköping (SE); Lin, Qingfen, 58336 Linköping (SE)
(74) Representative: Müller Verweyen

(57) **Abstract**

A method of training and/or evaluating a vehicle safety algorithm (21) adapted to detect living objects in the surrounding of a moving motor vehicle from image data recorded by a vehicle mounted imaging device comprises the steps of:
- by applying a virtual object processor (12) using a virtual living object model, generating artificial living object images (13),
- implementing said artificial living object images (13) into scene images (14) of a vehicle environment, thereby forming composed images (11); and
- inputting said composed images (11) into said vehicle safety algorithm (21).

## Description

The invention relates to a method of training and/or evaluating a vehicle safety algorithm adapted to detect living objects in the surrounding of a motor vehicle from image data recorded by a vehicle mounted imaging device.

In the development of an object detection algorithm for a driver assisting vision system in a car, large amounts of image data with living objects like pedestrians, bicyclists or animals in moving vehicle environments are needed for training as well as for evaluating the algorithm. However, it is difficult and extremely time consuming to record images for all kind of different situations including different living object orientations, poses and movements along different paths, different weather conditions, different environments, etc. This problem is even more serious in case of animal objects because animals are rarely present in moving vehicle environments, and it is hardly possible to arrange different scenes with animals in moving vehicle environments.

The object of the invention is to provide a time and cost effective method of training and/or evaluating a vehicle safety algorithm adapted to detect living objects in the surrounding of a moving motor vehicle.

The invention solves this object with the features of the independent claims. By applying a computer based virtual object processor using a virtual object model it is possible to generate an arbitrary number of artificial living object images covering all kinds of practically occurring situations including different object orientations, poses and movements along different paths, different weather conditions, different environments, etc. This consumes much less time than data collection in real environments with real living objects. Furthermore, scenes can be created which are difficult or even dangerous to collect in a real driving situation, such as driving close to an object, in particular an animal, with high speed. Another advantage is that after implementing an artificial living object image into a scene image the position of the object in the scene image is known and therefore an identification and marking of the living object in the image is not necessary.

In view of the application of the invention to a vehicle safety algorithm adapted to detect living objects in the surrounding of a ground motor vehicle, in particular a car, van, truck etc., the virtual objects are modelled as seen from a ground motor vehicle. For the same reason, environment scene images as seen from a ground motor vehicle are used. Furthermore, since vehicle mounted imaging means used to detect objects in the surrounding of a moving motor vehicle are usually infrared imaging devices, like infrared cameras, the artificial living object images are preferably generated in an infrared range, i.e. simulating infrared object images as recorded by an infrared imaging device. For the same reason infrared scene images and/or composed images in an infrared range are preferably used. However, the invention is not limited to the infrared range but can also be applied to other wavelengths, for example the optical range.

In one embodiment, real natural scene images recorded by an imaging means are used, which can be easily obtained for example by driving through different environments using a vehicle mounted imaging means. In this case, a road geometry estimation algorithm, in particular adapted to determine road edges or road lines, is preferably applied to the recorded scene images in order to be able to position the artificial living object images suitably in the scene images. It may be useful to introduce artificial images of virtual objects like trees, grass, rocks etc. into the natural scene images in order to obtain a greater variety of scene images. Furthermore, this makes it easier to generate images, or sequences of images, of partly occluded or hidden animals.

In another embodiment, artificial scene images generated by a computer based scene image generator are used. This has the advantage that the environment geometry, in particular the road geometry, is known and the objects can be easily placed along their paths in the scene images.

Preferably the object image processor is adapted to generate different thermal object textures corresponding to different weather conditions.

Preferably the object image processor is adapted to generate a 3-dimensional object model, object movement and/or an object path in the vehicle scene in order to provide a most close approximation to the behaviour of a real living object in a road environment. For the same reason, the object image processor is preferably adapted to apply variations to the living object model and/or the living object texture. Furthermore, the object image processor is preferably adapted to apply an atmospheric model and/or an imaging device model to the artificial living object images in order to account for influences of the changing atmosphere surrounding the vehicle, and/or the device characteristics of the vehicle mounted imaging means, on the artificial living object images.

In the following the invention shall be illustrated on the basis of preferred embodiments with reference to the accompanying drawings, in which:
- Fig. 1: shows a schematic diagram illustrating a method of training and/or evaluating a vehicle safety algorithm;
- Fig. 2: shows a schematic diagram illustrating details of gen- erating artificial living object images and composed images according to one embodiment of the invention; and
- Fig. 3: shows a schematic diagram illustrating details of gen- erating artificial living object images and composed images according to another embodiment of the inven- tion.

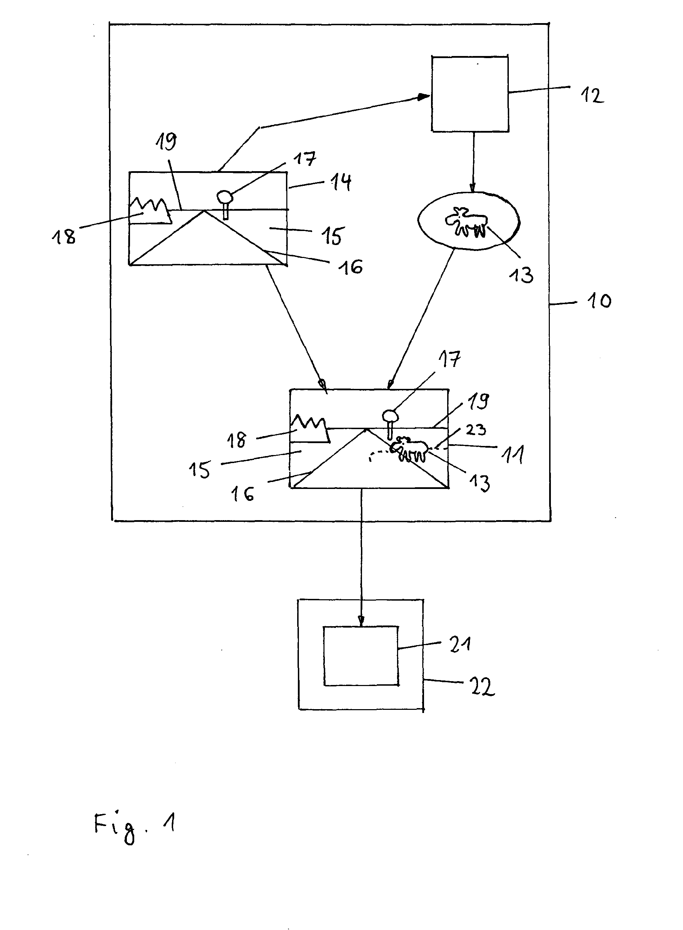

In Fig. 1 an image generating software 10 running on a computer system for generating composed images 11 of a vehicle surrounding environment is shown. The software 10 comprises a living object processor 12 adapted to generate artificial two-dimensional images 13 of living objects in an infrared range.

In the embodiment shown in Fig. 1 the living object is a large animal providing a safety hazard in a collision with a ground motor vehicle, like elk, cattle, deer, horse, etc.; however, the living object may also for example be a pedestrian or a bicyclist. In the following the artificial living object images 13 are called artificial animal images 13 for simplicity.

The software 10 combines the artificial animal images 13 with scene images 14 of a vehicle environment. Scene images 14 are background images of a vehicle surrounding environment in an infrared range, however without moving objects like other vehicles, pedestrians, animals, bicyclists etc., and may comprise a background scene 15 with, for example, trees 17, hills 18, horizon 19, etc. More specifically, the artificial animal image 13 is laid over the environment scene image 14 to form a composed image 11 as shown in Fig. 1.

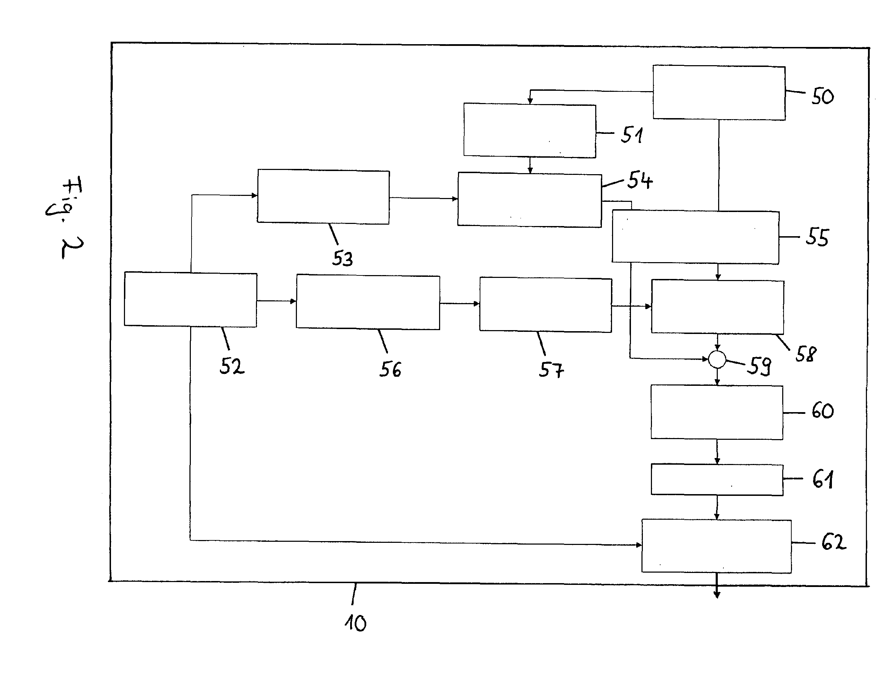

Fig. 2 shows details of the internal structure of the image generating software 10 in a preferred embodiment of the invention. In this embodiment the scene images 14 are based on natural scene images recorded by an infrared imaging device. Artificial background objects like trees 17, hills 18 etc. may be inserted into the natural scene images 14 in order to obtain a greater variety of scene images. Furthermore, this makes it easier to generate images, or sequences of images, of partly occluded or hidden animals.

The software 10 comprises a virtual object model generator 50 for generating a 3-dimensional virtual model of living objects. The model generator 50 is adapted to show a 3-dimensional model of a living object from all sides / viewing directions, and for all possible poses, orientations, positions and movement situations.

For each 3-dimensional virtual object model, a database 54 of object textures with thermal / infrared properties for different weather conditions is generated by means of a thermal modelling processor 51. The software 10 comprises a database 52 for storing recorded background sequences, i.e. sequences of recorded infrared scene images 14. The database 52 preferably also comprises information about the particular weather conditions under which each sequence of scene images 14 has been taken.

Based on the particular weather conditions 53 of a particular background sequence taken from the database 52, a corresponding object texture is selected from the texture database 54. The selected object texture and/or the particular object model under consideration can be modified, either randomly by a random variation generator 55 or via user specifications, in order to allow for individual variations between living objects in different sequences, for example variations in fur thickness, varying lengths of legs and neck, etc..

For a particular background sequence under consideration the 3-dimensional geometry of the road is estimated by a road geometry estimator 56, in particular by detecting the road edges 16, using for example Simultaneous Localization and Mapping (SLAM) techniques. Using the determined 3-dimensional model of the road 16 and its environment 15, in a path specifying means 57 an object path 23 is specified that the living object is presumed to follow, including the dynamics of the living object model along the path 23, for example when it starts running, with which speed, etc. The path 23 is used to generate movement of the object model in an object animating means 58 preferably using a library of different animations of living objects.

Generally, the two-dimensional artificial living object images 13 are obtained by suited projections of the 3-dimensional virtual object models as seen from a moving ground vehicle. This projection can for example be performed in the object animating means 58. The thermal object texture selected from the texture database 54 is applied to the animated virtual objects output by the object animating means 58 in a thermal texture applicator 59.

Before blending the artificial living object images 13 into the sequence of scene images 14 by an image combination means 62 to form a combined image 11 in an infrared range, preferably atmospheric effects and/or a model of a vehicle-mounted imaging means is applied to the artificial living object images 13 in a corresponding atmospheric model applicator 60 and/or an imaging device model applicator 61.

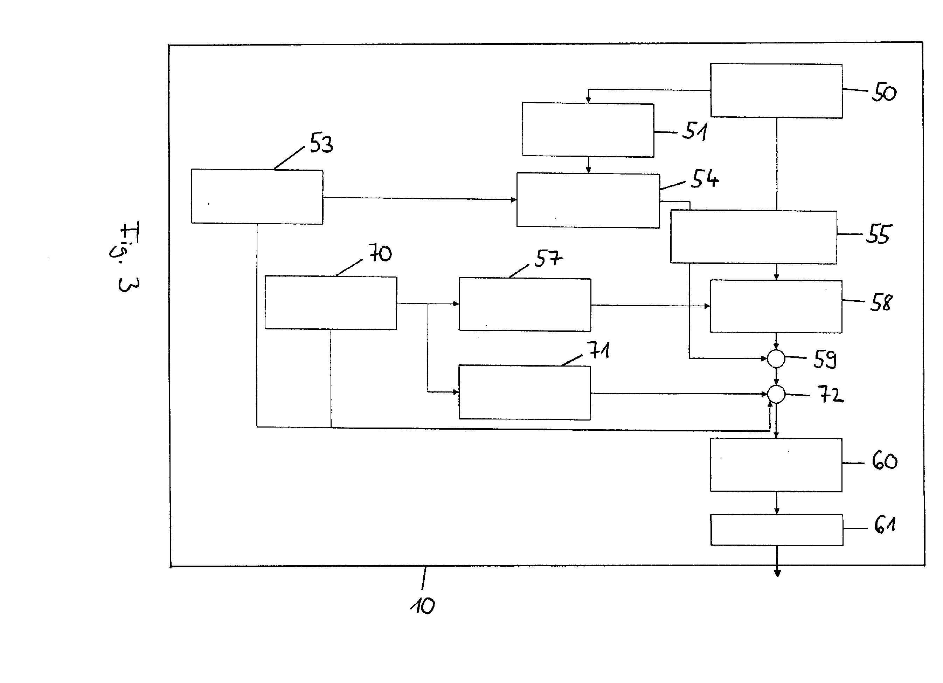

In another preferred embodiment of the invention as shown in Fig. 3, artificial scene images 14 generated by a scene image generator and stored in an artificial scene image database 70 are used in addition to or instead of recorded natural scene images 14. For artificial scene images 14 the 3-dimensional road geometry is known and there is no need for a road geometry estimator 56. The weather conditions 53 can for example be specified by a user, or randomly selected. In addition to the object path specifying means 57, an imaging device path specifying means 71 is provided to account for the imaging device moving together with the vehicle within the scene. The artificial scene images 14 are combined with the artificial living object images 13, under consideration of the imaging device path specification, in an image combination means 72 to form a combined image 11. In this embodiment, the image combination means 72 is preferably arranged between the thermal texture applicator 59 and the atmospheric model applicator 60 / imaging device model applicator 61.

The living object processor 12 shown in Fig. 1 comprises in particular the functions of virtual object model generator 50, random variation generator 55 and object animating means 58. The living object processor 12 may also comprise atmospheric model applicator 60 and imaging device model applicator 61, if present.

Sequences of combined images 11 are then input into an algorithm 21 adapted to detect living objects in the surrounding environment of a moving motor vehicle. In one application, the algorithm 21 is trained by the input sequences of combined images 11, i.e. internal parameters of the algorithm 21 are automatically optimized in a algorithm training software environment 22 in order to optimize the detection performance of the algorithm 21. In another application the input sequences of combined images 11 are used to evaluate the detection performance of the algorithm 21 in an algorithm evaluation software environment 22. The algorithm training and/or evaluation software environment 22 is preferably arranged to output one or more values indicating the detection performance and/or the internal parameters of the algorithm 21. It should be noted that the software environment 22 is not a vehicle-based software environment provided to detect living objects in the surrounding of a vehicle environment. Rather the software environment 22 is used in the technical development of commercial vision systems for ground motor vehicles.

## Claims

1. A method of training and/or evaluating a vehicle safety algorithm (21) adapted to detect living objects in the surrounding of a moving motor vehicle from image data recorded by a vehicle mounted imaging device, said method comprising the steps of:
- by applying a virtual object processor (12) using a virtual living object model, generating artificial living object images (13),
- implementing said artificial living object images (13) into scene images (14) of a vehicle environment, thereby forming composed images (11); and
- inputting said composed images (11) into said vehicle safety algorithm (21).

2. The method as claimed in claim 1, wherein said scene images (14) are based on natural scene images recorded by an imaging device.

3. The method as claimed in claim 2, comprising applying a road geometry estimation means (56) to said natural scene images (14).

4. The method as claimed in claim 3, comprising positioning said artificial living object images (13) in said natural scene images (14) depending on the output of said road geometry estimation means (56).

5. The method as claimed in claim 1, comprising the step of generating artificial scene images (14) by a scene image generator.

6. The method as claimed in any one of the preceding claims, wherein said object image processor (12) is adapted to generate different thermal object textures.

7. The method as claimed in claim 6, wherein different thermal object textures are stored in a database (54).

8. The method as claimed in any one of the preceding claims, wherein said object image processor (12) is adapted to generate a 3-dimensional object model.

9. The method as claimed in any one of the preceding claims, wherein said object image processor (12) is adapted to animate object movement.

10. The method as claimed in any one of the preceding claims, wherein said object image processor (12) uses a library of different living object animations.

11. The method as claimed in any one of the preceding claims, comprising generating an object path (23) in the vehicle scene (14).

12. The method as claimed in any one of the preceding claims, wherein said object image processor (12) is adapted to apply variations to the living object model.

13. The method as claimed in any one of the preceding claims, comprising applying an atmospheric model to artificial objects in said combined images (11).

14. The method as claimed in any one of the preceding claims, comprising applying an imaging device model to artificial objects in said combined images (11).

15. A method according to claim 1 of training and/or evaluating a vehicle safety algorithm (21) adapted to detect animals in the surrounding of a moving motor vehicle from image data recorded by a vehicle mounted imaging device, said method comprising the steps of:
- by applying a virtual animal processor (12) using a virtual animal model, generating artificial animal images (13),
- implementing said artificial animal images (13) into scene images (14) of a vehicle surrounding environment, thereby forming composed images (11); and
- inputting said composed images (11) into said vehicle safety algorithm (21).
